# EUROPEAN PATENT APPLICATION

(11) **EP 2 587 784 A2**
(43) Date of publication of application: **01.05.2013**
(21) Application number: 12190751.3
(22) Date of filing: 31.10.2012
(51) Int. Cl.: H04N 1/32

(54) **Image forming apparatus, host apparatus, and file editing method thereof**

(30) Priority: 31.10.2011 KR 20110112556
(71) Applicant: Samsung Electronics Co., Ltd, Gyeonggi-do 443-742 (KR)
(72) Inventor: Ko, Chang-gun, Gyeonggi-do (KR); Bae, Sung-hoon, Gyeonggi-do (KR); Yu, Hyeong-bae, Gyeonggi-do (KR)
(74) Representative: Taor, Simon Edward William

(57) **Abstract**

A file editing method of an image forming apparatus is provided and includes detecting image data included in a image file and generating a first raw data from the image file, scanning an image and generating a second raw data from the scanned image, combining the generated second raw data and the first raw data, and converting the combined first and second raw data into an image file to generate a new image file.

## Description

The present general inventive concept relates to an image forming apparatus, a host apparatus, and a file editing method thereof.

An image forming apparatus refers to an apparatus that prints print data generated in a terminal, such as a computer, or by itself on a piece of recording paper. A copier, printer, facsimile, and multifunction peripheral (MFP), which embodies the functions of a copier, printer, and facsimile in one apparatus, are examples of an image forming apparatus.

Recently, it has become possible to use various functions for transmitting a scanned image to a predetermined location using an image forming apparatus. For example, it has become possible for a user to transmit a scanned image to a predetermined location through an image forming apparatus using functions such as a SCAN TO EMAIL (a command to transmit a read script to email through a scanning unit) and SCAN TO FTP (a command to transmit a read script to an FTP server through a scanning unit).

However, scanning may halt due to at least one of various problems which may occur during a scanning process. For example, in the case in which a scanner uses an ADF (Auto Document Feeder) method, a scanning may halt due to paper jamming, and in the case in which a scanner uses a flatbed method, a scanning may halt due to hardware problems. In such cases, either only the scanned image or no image is transmitted.

Hereinafter is an explanation of a conventional method in the case in which a scanning halts due to at least one of various problems which may occur during scanning.

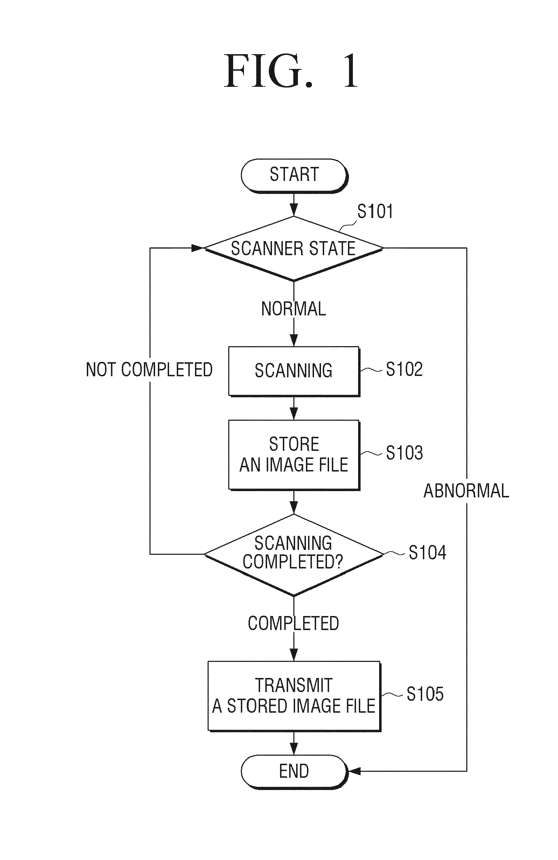

FIG. 1 illustrates a method of disregarding a prestored scan image and ending operations of a scanner when operations of the scanner have become abnormal and a scanned image is stored as an image file in an image forming apparatus. Here, a scanner state is determined in operation S101. If the scanner state is determined as normal in operation S101, scanner scans the image in operation S102 and stores a generated image file in operation S103. The scanner determines whether the scanning is completed in operation S104. If the scanning is determined to be completed in operation S104, then the generated and stored image file is transmitted in operation S105. If the scanning is determined to be not completed in operation S104, then the process returns to determine the scanner state in operation S101. If the scanner state is determined to be abnormal in operation S101, the process is ended. In this case, a user has to try scanning the document again from the beginning. Herein, it is possible to prevent a process of an image which succeeded in scanning and an image which failed in scanning being generated as different files, but in the case where there are a lot of images to scan, the user needs to conduct a number of operations, thereby causing loss of time.

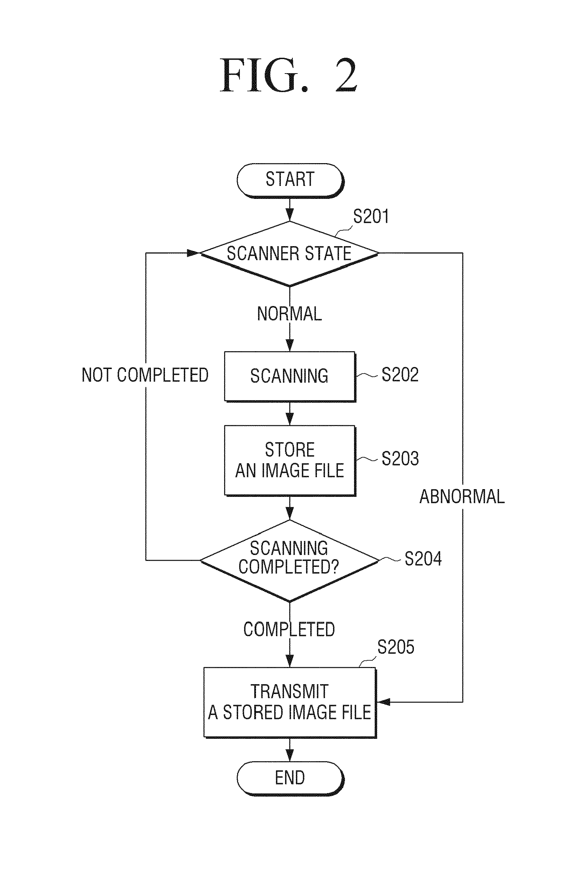

FIG. 2 illustrates a method of transmitting only a prestored scan image to a determined location when operations of a scanner have become abnormal and a scanned image is stored as an image file in an image forming apparatus. Here, a scanner state is determined in operation S201. If the scanner state is determined as normal in operation S201, scanner scans the image in operation S202 and stores a generated image file in operation S203. The scanner determines whether the scanning is completed in operation S204. If the scanning is determined to be completed in operation S204, then the generated and stored image file is transmitted in operation S205. If the scanning is determined to be not completed in operation S204, then the process returns to determine the scanner state in operation S201. If the scanner state is determined to be abnormal in operation S201, the prestored scan image file is transmitted in operation S205. In such a case, the scanned image is generally transmitted using an SMB (Service Message Block) or FTP (File Transfer Protocol). That is, the image forming apparatus transmits the stored scanned image to the location. Therefore, the user is able to start scanning from the image which failed scanning, but in this case, the problem is that the image may be stored in a different file from the transmitted image. If it is an image which needs to be stored in the same file, the user would have to scan the images from the first page all over again.

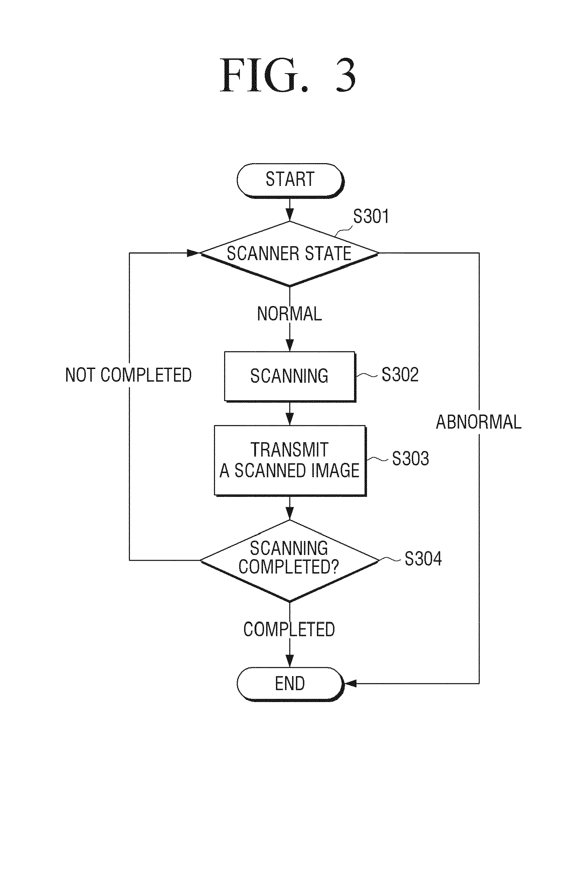

FIG. 3 illustrates a method of transmitting images of all pages to a predetermined location. This method is slower than the methods of FIG. 1 or FIG. 2, but is generally used in the case where an image forming apparatus does not have sufficient memory. Here, a scanner state is determined in operation S301. If the scanner state is determined as normal in operation S301, scanner scans the image in operation S302 and stores a generated image file in operation S303. The scanner determines whether the scanning is completed in operation S304. If the scanning is determined to be completed in operation S304, the process is ended. If the scanning is determined to be not completed in operation S304, then the process returns to determine the scanner state in operation S301. If the scanner state is determined to be abnormal in operation S301, the process is ended. In this case, during the scanning, the scanned image is not stored in an image file, but a scanned image of raw data is transmitted to a determined location, and whether the scanner ended normally or abnormally, the raw data transmitted after the scanning ended is made as an image file and stored. Thus, when the scanning ends abnormally, problems similar to those associated with FIG. 2 may occur.

In addition, even if the state of the scanner is normal, the user cannot additionally insert a scanned image regarding a scan image which has been transmitted to a predetermined location or been made as an image file, without using an image editor. In addition, there is no way to insert the scanned image directly to a prestored document file or excel file.

In this case, if the user starts scanning from the beginning all over again, he/she will have to repeat unnecessary operations, and if the user scans the next image of the scanned image, an additional image file different from the previously-made image file will be generated.

The present general inventive concept provides an image forming apparatus and a host apparatus which can add a scanned image to a generated image file, and a file editing method thereof.

Additional features and utilities of the present general inventive concept will be set forth in part in the description which follows and, in part, will be obvious from the description, or may be learned by practice of the general inventive concept.

The foregoing and/or other features and utilities of the present general inventive concept may be achieved by providing a file editing method of an image forming apparatus which may include detecting image data included in an image file and generating a first raw data from the image file; scanning an image and generating a second raw data from the scanned image; combining the generated second raw data and the generated first raw data; and converting the combined first and second raw data to an image file to generate a new image file.

The image file may be received in a host apparatus connected to the image forming apparatus or be stored in the image forming apparatus.

The file editing method may further include displaying a UI window to display a file list including the image file.

The file editing method may further include displaying the UI window to receive a combination condition regarding the image file.

The combining may include detecting page information of the first raw data using file information of the image file; and combining the second raw data from a next page of the first raw data using page information of the detected first raw data.

The new image file may be generated in a same format as the image file.

The foregoing and/or other features and utilities of the present general inventive concept may also be achieved by providing a file editing method of a host apparatus connected to an image forming apparatus which may include receiving a first raw data corresponding to an image; detecting image data included in an image file stored in the host apparatus and generating a second raw data from the image file; combining the received first raw data and the generated second raw data; and converting the combined first and second raw data into an image file to generate a new image file.

The generating the second raw data may be performed before the receiving of the first raw data.

The file editing method may display a UI window to display a file list including the image file stored in the host apparatus.

The combining may include detecting page information of the second raw data using file information of the image file; and combining the first raw data from a next page of the second raw data using page information of the detected second raw data.

The new image file may be generated in a same format as the image file.

The file editing method may further include storing the new image file to a same location as the image file.

The file editing method may further include inserting the received first raw data at a particular location of a document stored in the host apparatus using an Application Programming Interface (API).

The foregoing and/or other features and utilities of the present general inventive concept may also be achieved by providing an image forming apparatus which may include a raw data generating unit to detect image data included in an image file and to generate a first raw data from the image data; a scanning unit to scan an image to generate a second raw data; a controlling unit to combine the generated second raw data and the generated first raw data; and an image file generating unit to convert the combined first and second raw data into an image file to generate a new image file.

The image file may be received in a host apparatus connected to the image forming apparatus or is stored in the image forming apparatus.

The image forming apparatus may further include a user interface unit which displays a user interface (UI) window to display a file list including the image file.

The image forming apparatus may further include a user interface unit to display a user interface (UI) window to receive a combination condition regarding the image file.

The controlling unit may detect page information of the first raw data using file information of the image file, and combine the second raw data from a next page of the first raw data using page information of the detected first raw data.

The controlling unit may control the image file generating unit to convert the first and second raw data into a same format of the image file to generate the new image file.

The foregoing and/or other features and utilities of the present general inventive concept may also be achieved by providing a host apparatus connected to an image forming apparatus which may include a communication interface unit to receive a first raw data corresponding to an image scanned in the image forming apparatus; a raw data generating unit to detect image data included in an image file stored in the host apparatus and to generate a second raw data from the image file; a controlling unit to combine the received first raw data and the second raw data; and an image file generating unit to convert the combined first and second raw data into an image file to generate a new image file.

The host apparatus may further include a user interface unit to display a UI window to display a file list including the image file stored in the host apparatus.

The controlling unit may detect page information of the second raw data using file information of the image file, and accumulate and combine the first raw data from a next page of the second raw data using page information of the detected second raw data.

The controlling unit may control the image file generating unit to convert the combined first and second raw data into a same format as the image file to generate the new image file.

The host apparatus may further include a storage unit to store a new image file, and the controlling unit may control the storage unit to store the new image file to a same location as the image file.

The controlling unit may insert the received first raw data at a particular location of the document stored in the host apparatus using an API (Application Programming Interface).

The foregoing and/or other features and utilities of the present general inventive concept may also be achieved by providing a non-transitory computer readable medium on which a program code, executable by a computer, for executing a file editing method in an image forming apparatus which may include detecting image data included in a image file and generating a first raw data from the image file; scanning an image and generating a second raw data from the scanned image; combining the generated second raw data and the generated first raw data; and converting the combined first and second raw data into an image file to generate a new image file.

The foregoing and/or other features and utilities of the present general inventive concept may also be achieved by providing a non-transitory computer readable medium on which a program code, executable by a computer, for executing a file editing method in a host apparatus connected to an image forming apparatus which may include receiving a first raw data corresponding to an image scanned in the image forming apparatus; detecting image data included in a image file stored in the host apparatus and generating a second raw data from the image file; combining the received first raw data and the generated second raw data; and converting the combined first and second raw data into an image file to generate a new image file.

These and/or other features and utilities of the present general inventive concept will become apparent and more readily appreciated from the following description of the embodiments, taken in conjunction with the accompanying drawings of which:
FIGS. 1 to 3 are flowcharts illustrating a conventional processing method in which a scanning halts due to various problems during scanning;
FIG. 4 is a block diagram illustrating an image forming apparatus according to exemplary embodiments of the present general inventive concept;
FIG. 5 is a block diagram illustrating a host apparatus according to exemplary embodiments of the present general inventive concept;
FIG. 6 is a view illustrating a UI window regarding a file list including a generated image file according to exemplary embodiments of the present general inventive concept;
FIG. 7 is a flowchart illustrating a file editing method of an image forming apparatus according to exemplary embodiments of the present general inventive concept; and
FIG. 8 is a flowchart illustrating a file editing method of a host apparatus according to exemplary embodiments of the present general inventive concept.

Reference will now be made in detail to exemplary embodiments of the present general inventive concept, examples of which are illustrated in the accompanying drawings, wherein like reference numerals refer to the like elements throughout. Exemplary embodiments are described below in order to explain the present general inventive concept with reference to the figures.

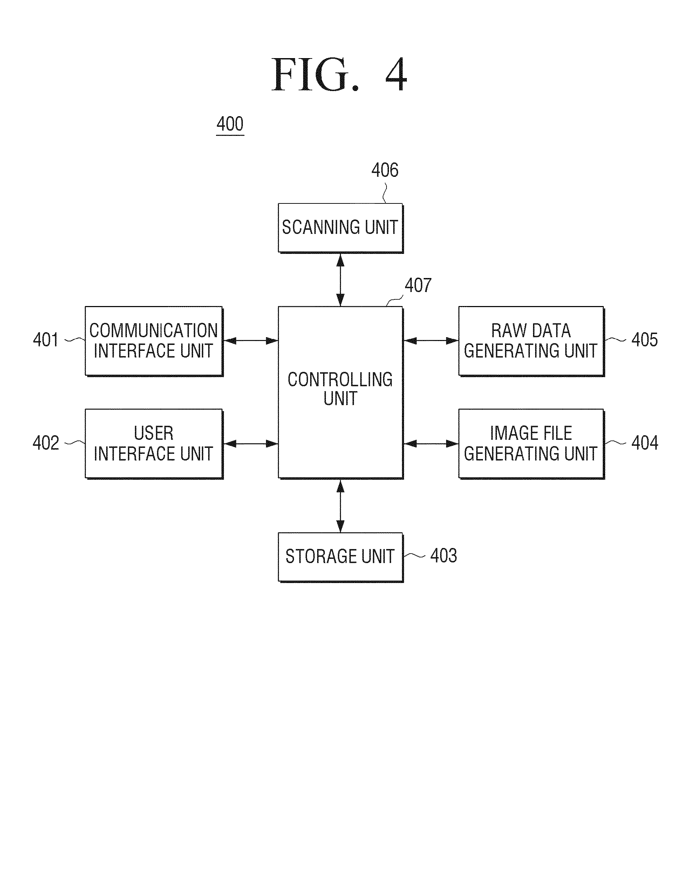

FIG. 4 is a block diagram illustrating an image forming apparatus according to exemplary embodiments of the present general inventive concept. With reference to FIG. 4, the image forming apparatus 400 includes a communication interface unit 401, user interface unit 402, storage unit 403, image file generating unit 404, raw data generating unit 405, scanning unit 406, and controlling unit 407.

The communication interface unit 401 connects an external device (for example, a host apparatus) to the image forming apparatus 400. More specifically, through the communication interface unit 401, an image file may be received from the host apparatus. The image file received from the host apparatus may be a pregenerated image file. In addition, through the communication interface unit 401, a new image file generated in the image forming apparatus 400 may be transmitted to the host apparatus.

Herein, the host apparatus may be an SMB (Service Message Block) server, FTP (File Transfer Protocol) server, PC (Personal Computer), and/or a print controlling terminal. In addition, the communication interface unit 401 may be connectable through wires or wirelessly through a short distance communication network (LAN, Local Area Network) or an internet connection, or be connectable through a Universal Serial BUS (USB) or other port.

The user interface unit 402 allows for setting or selecting various functions supported in the image forming apparatus 400. The user interface unit 402 may allow a user to physically enter settings or selections by physically touching the image forming apparatus 400.

More specifically, the user interface unit 402 may display a UI window regarding a file list including a generated image file. That is, in the case where a scanning halts due to at least one of various problems which may occur during scanning, the host apparatus or image forming apparatus 400 may store the image file generated in the scanning process. In this case, the user interface unit 402 may display the UI window regarding the file list including the generated image file stored in the host apparatus or the image forming apparatus 400. In this case, when selecting the generated image file in the file list through the UI window, the image forming apparatus 400 may add a scanned image to the generated image file and generate a new image file.

In addition, the user interface unit 402 may display the UI window which receives a combination condition regarding the generated image file. That is, in the case that generated image files having similar characteristics satisfy a certain condition selected in the UI window, the files may be combined in one file. Herein, the combination condition may be time or the number of generated image files. For example, assuming that a received fax data is stored in a PDF file, a storage location may be set as "D:\RxFax" through the UI window of the image forming apparatus, and a file name has formats of "20110726_171829_corporate tax department.pdf" and "YYYYMMDD_HHMMSS_XXXX.pdf". A corporate tax department may receive a lot of fax data even in one day, and thus in one month, there may be hundreds of such files. In this case, for example, when the number of files reaches 100, or on the first day of each month, it will be possible to select a combination condition through the UI window to combine all the files of the previous month in one file. In this case, the image forming apparatus may combine the generated files and generate a new image file. In addition, the new image file may have a PDF format which is the same format of the generated image files, and may be stored in the "D: \RxFax" folder where files were stored until they were combined. Although described herein as occurring when the number of files reaches 100 or on the first day of each month, aspects need not be limited thereto such that the files may be combined more or less often, for example, when the number of files reaches 50 or 200 or on every Friday. Further, the filed may be combined according to a cumulative size of the files to be combined or an expected size of the file after combining.

Herein, the user interface unit 402 may be embodied as an apparatus where input and output are embodied simultaneously, such as a touch pad, or may be embodied by combining an input apparatus, such as a mouse and keyboard, with a display apparatus, such as a cathode ray tube (CRT) monitor, liquid crystal display (LCD) monitor, light-emitting diode (LED) display, and/or plasma display panel (PDP).

The storage unit 403 stores various programs and data to drive the image forming apparatus 400. More specifically, the storage unit 403 may store raw data generated in the scanning unit 406, the image file generated in the image forming apparatus, and the image file received from the host apparatus.

Herein, the storage unit 403 may be embodied as a storage element having an internalized format, such as a RAM (Random Access Memory), Flash Memory, ROM (Read Only Memory), EPROM (Erasable Programmable ROM), EEPROM (Electronically Erasable and Programmable ROM), Register, Hard Disk, Removable Disk, and Memory Card, and also as a storage element having an attachable format, such as a USB Memory.

The raw data generating unit 405 detects the image data included in the generated image file and generates a first raw data.

In the case where scanning halted due to at least one of various problems during scanning, the host apparatus or image forming apparatus 400 may store the image file generated in the scanning process, and the file generated in this case is the generated image file. The generated image file may be received in the host apparatus connected to the image forming apparatus 400. In addition, the generated image file may be the image file stored in the storage unit 403 of the image forming apparatus 400. In addition, an image file may refer to a file in formats such as PDF, Tiff, JPEG, BMP, and XPS.

In addition, raw data may refer to data having only the information on the intensity of light sensed by the scanning unit 406. That is, an image scanned by the scanning unit 406 may be raw data until it is converted into an image file. That is, raw data refers to data where the image scanned by the scanning unit 406 does not have a predetermined white balance, parameter, and color space, and which has only the information on the intensity of light sensed in the scanning unit 406.

Hereinafter is an explanation in which the image file is a BMP to specifically explain the raw data generating unit 405. When the image file is in a BMP file format, the raw data generating unit 405 may remove the file information stored in a header of the image file to have the image information only, and generate a first raw data.

The image file generating unit 404 converts a first and second raw data into an image file, and generates a new image file. Specifically, in the case in which the first raw data generated in the raw data generating unit 405 and the second raw data generated in the scanning unit 406 are combined by a control of a controlling unit 407 to be explained hereinafter, the image file generating unit 404 converts the combined first and second raw data into an image file and generates a new image file. That is, the image file generating unit 404 may generate an image file in formats of PDF, Tiff, JPEG, BMP, and XPS, from the combined raw data.

The scanning unit 406 reads a script. More specifically, the scanning unit 406 includes a lens unit (not illustrated) which forms image from the light reflected from the script on an internal image sensor, and may read the image information of the script from the light formed in the image sensor. In addition, the scanning unit 406 may scan an image to add to the first raw data generated in the raw data generating unit 404 and generate a second raw data. Herein, the image sensor of the scanning unit 406 may be embodied as a CIS (CMOS image sensor) or CCD (Charge Coupled Device).

The controlling unit 407 controls the overall functions of the image forming apparatus 400. More specifically, the controlling unit 407 may control the overall functions of the communication interface unit 401, user interface unit 402, storage unit 403, image file generating unit 404, raw data generating unit 405, and scanning unit 406.

In addition, the controlling unit 407 may accumulate and combine the second raw data generated in the scanning unit 406 to the first raw data generated in the raw data generating unit 405. That is, the controlling unit 407 may detect the page information of the first raw data using the file information of the generated image file, and accumulate and combine the second raw data from a next page of the first raw data using the detected page information of the first raw data. That is, through the file header information of the image file, it is possible to detect the page information of the first raw data, and accumulate and combine the second raw data generated in the scanning unit 406 from the next page of the first raw data using the detected page information of the first raw data.

In addition, the controlling unit 407 may convert the first and second raw data into image files of a same format of the generated image file, and control the image file generating unit 404 to generate a new image file. That is, in the case where the generated image file is BMP, the controlling unit 407 may control the image file generating unit 404 to generate the new image file into BMP as well.

Herein, the controlling unit 407 may include a CPU, ROM where a controlling program is stored, and RAM which stores input data or is used as an operation-related storage area. Herein, the CPU, ROM, and RAM may be mutually connected through an internal BUS.

The raw data generating unit 405 and the image file generating unit 404 may be separately configured from the controlling unit 407; however, aspects need not be limited thereto such that the controlling unit 407 may be embodied to perform all the functions of the raw data generating unit 405 and the image file generating unit 404.

Meanwhile, according to the image forming apparatus according to exemplary embodiments of the present general inventive concept, as it is possible to add an additional scanned image to a generated image file, it is possible to combine the additionally scanned image easily to the generated image file even when an error occurs during scanning.

In addition, it is difficult to manage regularly received fax image files and scan image files made through frequent scanning since the number of files increases greatly as time goes by. According to various exemplary embodiments of the present general inventive concept, it is possible to combine fax data or scan data periodically, and thus file managing becomes easy.

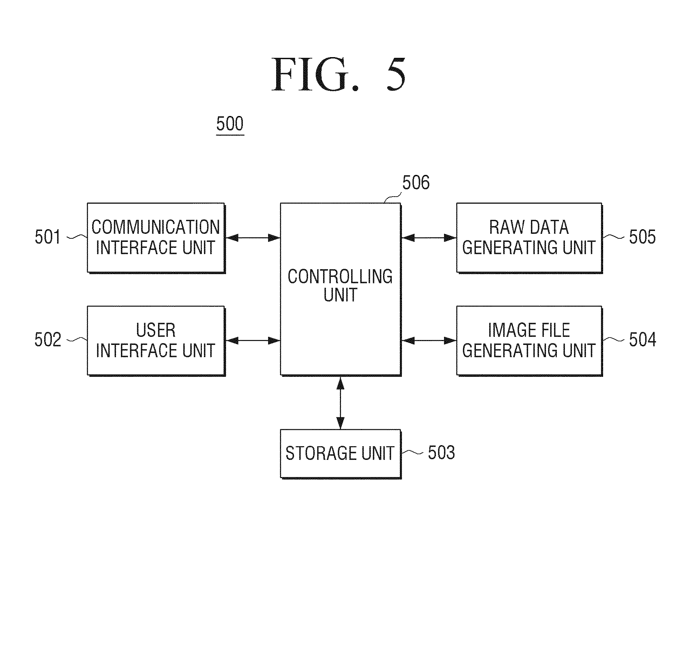

FIG. 5 is a block diagram illustrating a host apparatus according to exemplary embodiments of the present general inventive concept. With reference to FIG. 5, the host apparatus 500 includes a communication interface unit 501, user interface unit 502, storage unit 503, image file generating unit 504, raw data generating unit 505, and controlling unit 506. Herein, the host apparatus 500 may be an SMB server, FTP server, PC, and/or print controlling terminal.

The communication interface unit 501 connects the host apparatus 500 to an external device (for example, an image forming apparatus). More specifically, it is able to receive a third raw data, which corresponds to an image scanned in the image forming apparatus 400, through the communication interface unit 501.

Herein, the communication interface unit 401 may be connectable through wires or wirelessly through a short distance communication network (LAN: Local Area Network) or an internet connection, or may be connectable through a USB port (Universal Serial Bus) or other port.

The user interface unit 502 allows for setting or selecting various functions that the host apparatus 500 supports. The user interface unit 502 may allow a user to physically enter settings or selections by physically touching the host apparatus 500. More specifically, the user interface unit 502 may display a UI window regarding a file list which includes the generated image file. Herein, the user interface unit 502 may be embodied as an apparatus where input and output are embodied simultaneously, such as a touch pad, or be embodied by combining an input apparatus, such as a mouse and keyboard with a display apparatus such as a CRT monitor, LCD monitor and LED monitor.

The storage unit 503 stores various programs and data to drive the host apparatus 500. More specifically, the storage unit 503 may store the raw data generated in the image forming apparatus 400, and the image file generated in the image forming apparatus 400.

In addition, the storage unit 503 may store a new image file generated by the image file generating unit 504 to be explained hereinafter. Herein, the storage unit 503 may be embodied not only as a storage element mounted internally such as a RAM (Random Access Memory), Flash Memory, ROM (Read Only Memory), EPROM (Erasable Programmable ROM), EEPROM (Electronically Erasable and Programmable ROM), Register, Hard disk, Removable disk, and Memory card, but also in a detachable format, such as a USB memory.

The raw data generating unit 505 detects the image data included in the generated image file stored in the host apparatus 500 and generates a fourth raw data.

In the case where the scanning halted due to at least one of various problems during scanning, the host apparatus 500 or image forming apparatus 400 may store the image file generated during the scanning process, and herein the generated image file refers to this generated file.

In addition, an image file may refer to a file including image data, that is, a file in a format of, for example, PDF, Tiff, JPEG, BMP, and XPS.

In addition, raw data may refer to data which has only the information on the intensity of light sensed by the scanning unit 406 of the image forming apparatus 400. That is, the image scanned by the scanning unit 406 may be raw data until it is converted to an image file. That is, raw data refers to data where the image scanned by the scanning unit 406 does not have a predetermined while balance, parameter, and color space, and which has only the information on the intensity of light sensed in the scanning unit 406.

Hereinafter is an explanation in which the image file is a BMP to specifically explain the raw data generating unit 505. When the image file is in a BMP file format, the raw data generating unit 505 may remove the file information stored in a header of the image file to have the image information only, and generate a first raw data.

The image file generating unit 504 converts a third and fourth raw data into an image file, and generates a new image file. Specifically, in the case in which the fourth raw data generated in the raw data generating unit 505 and the third raw data received in the image forming apparatus 400 are combined by a control of the controlling unit 407 to be explained hereinafter, the image file generating unit 504 converts the combined third and fourth raw data into image files and generates a new image file. That is, the image file generating unit 504 may generate image files in formats of PDF, Tiff, JPEG, BMP, and XPS, from the combined raw data.

The controlling unit 506 controls the overall functions of the host apparatus 500. More specifically, the controlling unit 506 may control the overall functions of the communication interface unit 501, user interface unit 502, storage unit 503, image file generating unit 504, and raw data generating unit 505.

In addition, the controlling unit 506 may accumulate and combine the third raw data received in the image forming apparatus 400 to the fourth raw data generated in the raw data generating unit 505. That is, the controlling unit 506 may detect the page information of the fourth raw data using the file information of the generated image file, and accumulate and combine the third raw data to the next page of the fourth raw data using the detected page information of the fourth raw data. That is, the controlling unit 506 may detect page information of the fourth raw data by the file header information of the image file, and accumulate and combine the received third raw data from the next page of the fourth raw data using the detected page information of the fourth raw data.

In addition, the controlling unit 506 may convert the third and fourth raw data into an image file of the same format of the generated image file, and control the image file generating unit 504 to generate a new image file. That is, in the case where the generated image file is BMP, the controlling unit 506 may control the image file generating unit 504 to generate the new image file into BMP as well.

In addition, the controlling unit 506 may control the storage unit 503 to store the new image file generated in the image file generating unit 504 in the same location as the generated image file. That is, the controlling unit 506 may delete the generated image file, store a new image file in the location that the previous generated image file was stored, or cover the new image file over the generated image file, or store the new image file in the location where there used to be the generated image file in the state where the generated image file is left.

In addition, the controlling unit 506 may insert the received third raw data into a particular location of a document stored in the host apparatus 500 using the API (Application Programming Interface). That is, in the case in which the file stored in the storage unit 503 of the host apparatus 500 is a document file (doc, xls etc.) and not an image file (PDF or JPG or BMP etc.), it is possible to individually insert the newly scanned image information (raw data) in a particular location of the corresponding document stored in the storage unit 503 of the host apparatus 500 using API function provided in each office. Herein, the newly scanned image information refers to the image information input through the scanning apparatus of the image forming apparatus 400, and the API function provided in the office may be the same as the automation function provided in MS office.

Herein, the controlling unit 506 may include a CPU, ROM where the controlling program is stored, and RAM which stores the input data or is used as an operation-related storage area. Herein, the CPU, ROM, and RAM may be mutually connected through an internal BUS.

The raw data generating unit 505 and the image file generating unit 504 may be separately configured from the controlling unit 506; however, aspects need not be limited thereto such that the controlling unit 506 may be embodied to perform all the functions of the raw data generating unit 505, and the file generating unit 504.

Meanwhile, according to the host apparatus according to exemplary embodiments of the present general inventive concept, as it becomes able to add the scanned image to the generated image file, even if an error occurs during scanning, it is possible to combine the additionally scanned image easily to the generated image file.

In addition, in the case of adding a newly scanned image to a particular page of a document, it is possible to add the new image without having to open the document file by only scanning the new image.

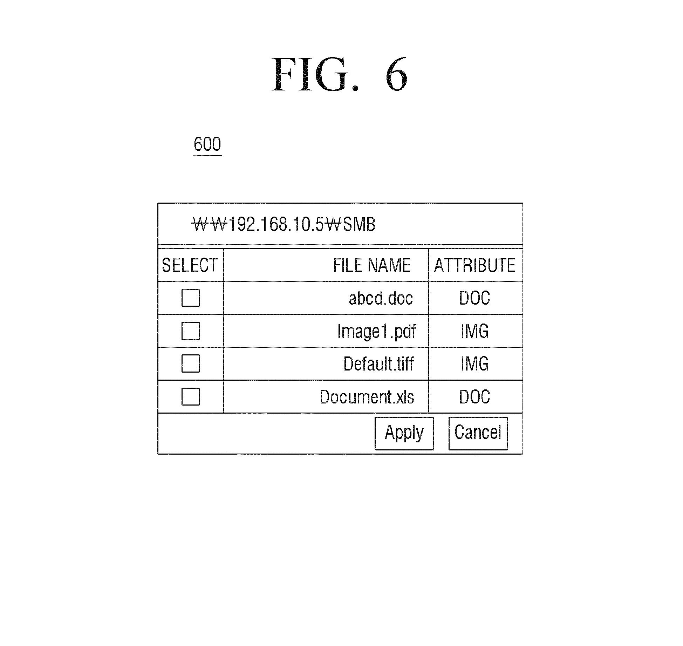

FIG. 6 is a view illustrating a UI window regarding a file list including the generated image file according to exemplary embodiments of the present general inventive concept. With reference to FIG. 6, the UI window 600 may display a file list which includes a generated image file. That is, in the case where scanning halted due to at least one of various problems during scanning, the host apparatus 500 or image forming apparatus 400 may store the image file generated in the scanning process. In this case, the user interface unit 402 may display a UI window regarding the file list including the generated image file stored in the host apparatus 500 or the image forming apparatus 400. In this case, when selecting the generated image file in the file list through the UI window, the image forming apparatus 400 may add the scanned image to the generated image file and generate a new image file. For example, in FIG. 6, image files Image1.pdf and Default.tiff are shown in the file list through the UI window.

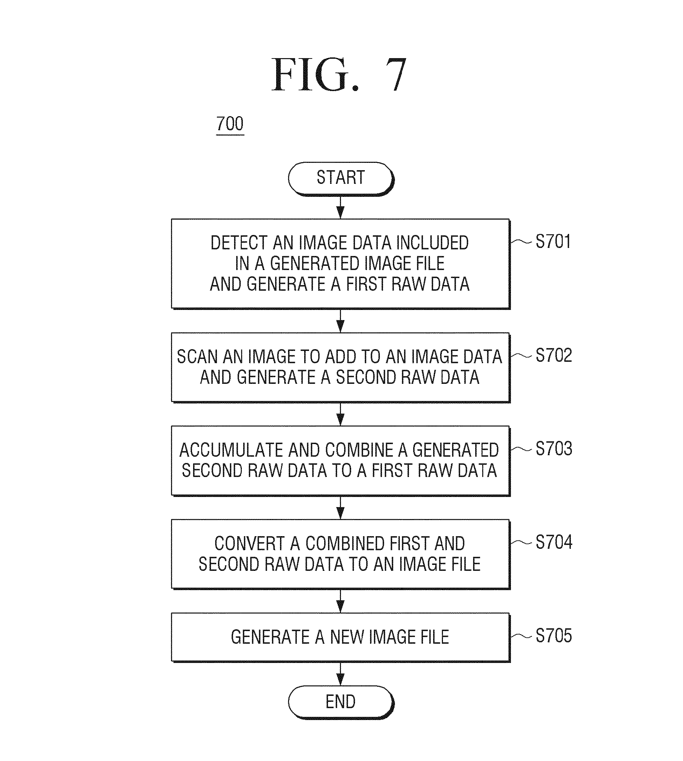

FIG. 7 is a flowchart illustrating a file editing method of an image forming apparatus according to exemplary embodiments of the present general inventive concept. With reference to FIG. 7, image data included in a generated image file is detected to generate a first raw data (S701). An image to add to the image data is scanned to generate a second raw data (S702). The generated second raw data is accumulated and combined to the generated first raw data (S703). The combined first and second raw data are converted into image files (S704) to generate a new image file (S705). However, aspects are not limited thereto, and thus it is possible to scan the image to add first, generate the second raw data, detect an image data included in the generated image file, and generate a first raw data.

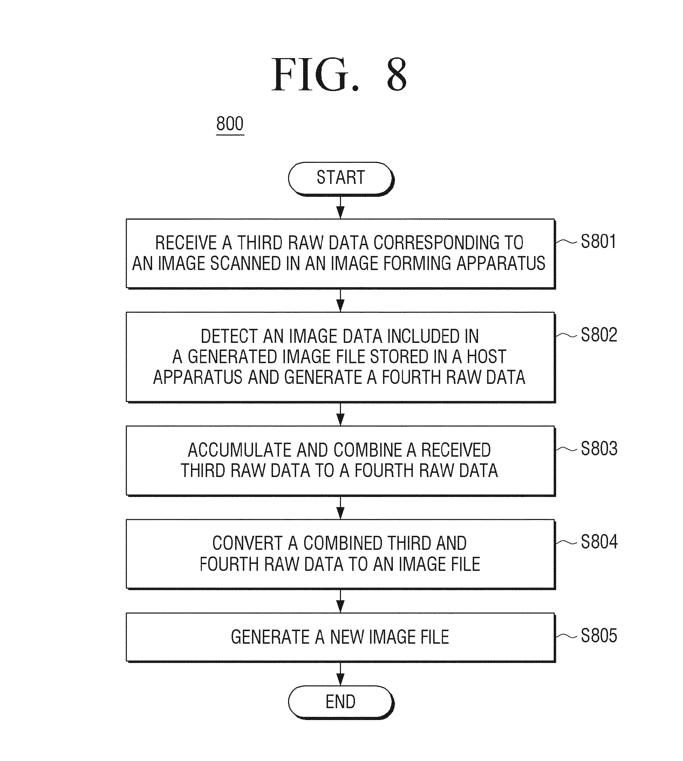

FIG. 8 is a flowchart illustrating the file editing method of the host apparatus according to exemplary embodiments of the present general inventive concept. With reference to FIG. 8, a third raw data corresponding to an image scanned in the image forming apparatus is received (S801). Image data included in the generated image file stored in the host apparatus is detected to generate a fourth raw data (S802). In addition, the received third raw data is accumulated and combined to the generated fourth raw data (S803). In addition, the combined third and fourth raw data are converted into an image file (S804) to generate a new image file (S805). However, aspects are not limited thereto, and thus it is possible to detect image data included in the generated image file stored in the host apparatus, generate the fourth raw data, and receive the third raw data corresponding to the image scanned in the image forming apparatus.

The aforementioned file editing methods and file editing methods of the host apparatus image forming apparatus according to various exemplary embodiments of the present general inventive concept may be embodied by a program code stored in non-transitory recording media of various types and executable by a CPU. More specifically, the code for executing the aforementioned methods may be stored in non-transitory recording media of various types readable in a terminal, such as in RAM (Random Access Memory), Flash Memory, ROM (Read Only Memory), EPROM (Erasable Programmable ROM), EEPROM (Electronically Erasable and Programmable ROM), Register, Hard disk, Removable disk, Memory card, USB Memory, and CD-ROM. Accordingly, the program may be installed in such a manner that the file editing method can be executed in an apparatus where a recording media is connected or mounted.

Meanwhile, according to various exemplary embodiments of the present general inventive concept, as it becomes possible to add a scanned image to the generated image file, it is possible to combine the scanned image to the generated image file even when an error occurs. In addition, even when adding a newly scanned image to a particular page of a document, it is possible to add the new image by scanning the new image to be added without having to open the document file. In addition, it is difficult to manage a received fax image file generated periodically or a scan image file made by frequent scanning since the number of files increases greatly as time goes by. According to various exemplary embodiments of the present general inventive concept, it is possible to combine fax data or scan data periodically, and thus file managing becomes easy.

Although a few exemplary embodiments of the present general inventive concept have been shown and described, it will be appreciated by those skilled in the art that changes may be made in the described exemplary embodiments without departing from the principles of the general inventive concept, the scope of which is defined in the appended claims and their equivalents.

## Claims

1. A file editing method of an image forming apparatus, the file editing method comprising:
detecting image data included in an image file and generating a first raw data from the image file;
scanning an image and generating a second raw data from the scanned image;
combining the generated second raw data and the generated first raw data; and
converting the combined first and second raw data to an image file to generate a new image file.

2. The file editing method according to claim 1, wherein the image file is received in a host apparatus connected to the image forming apparatus or is stored in the image forming apparatus.

3. The file editing method according to any one of claims 1 to 2, further comprising displaying a UI window to display a file list including the image file.

4. The file editing method according to any one of claims 1 to 3, further comprising displaying the UI window to receive a combination condition regarding the image file.

5. The file editing method according to any one of claims 1 to 4, wherein the combining comprises detecting page information of the first raw data using file information of the image file; and
combining the second raw data from a next page of the first raw data using page information of the detected first raw data.

6. The file editing method according to any one of claims 1 to 5, wherein the new image file is a same format as the image file.

7. A file editing method of a host apparatus connected to an image forming apparatus, the file editing method comprising:
receiving a first raw data corresponding to an image;
detecting image data included in an image file stored in the host apparatus and generating a second raw data from the image file;
combining the received first raw data and the generated second raw data; and
converting the combined first and second raw data into an image file to generate a new image file.

8. The file editing method according to claim 7, wherein the generating the second raw data is performed before the receiving of the first raw data.

9. The file editing method according to any one of claims 7 to 8, further comprising displaying a UI window to display a file list including the image file stored in the host apparatus.

10. The file editing method according to any one of claims 7 to 9, wherein the combining comprises:
detecting page information of the second raw data using file information of the image file; and
combining the first raw data from a next page of the second raw data using page information of the detected second raw data.

11. The file editing method according to any one of claims 7 to 10, wherein the new image file is generated in a same format as the image file.

12. The file editing method according to any one of claims 7 to 11, further comprising storing the new image file to a same location as the image file.

13. The file editing method according to any one of claims 7 to 12, further comprising inserting the received first raw data at a particular location of a document stored in the host apparatus using an API (Application Programming Interface).

14. An image forming apparatus comprising:
a raw data generating unit arranged to detect image data included in an image file and to generate a first raw data from the image data;
a scanning unit to scan an image arranged to generate a second raw data;
a controlling unit arranged to combine the generated second raw data and the generated first raw data; and
an image file generating unit arranged to convert the combined first and second raw data into an image file to generate a new image file.

15. A host apparatus connected to an image forming apparatus, the host apparatus comprising:
a communication interface unit arranged to receive a first raw data corresponding to an image scanned in the image forming apparatus;
a raw data generating unit arranged to detect image data included in an image file stored in the host apparatus and to generate a second raw data from the image file;
a controlling unit arranged to combine the received first raw data and the second raw data; and
an image file generating unit arranged to convert the combined first and second raw data into an image file to generate a new image file.
